# EUROPÄISCHE PATENTANMELDUNG

(11) **EP 3 057 068 A1**
(43) Veröffentlichungstag der Anmeldung: **17.08.2016**
(21) Anmeldenummer: 15154895.5
(22) Anmeldetag: 12.02.2015
(51) Int. Cl.: G07C 5/00, G06Q 10/06, G08C 17/02, G08G 1/00

(54) **Datenerfassung für Bodenflächenbearbeitungsfahrzeuge und -geräte**

(71) Anmelder: Boschung Mecatronic AG, 1530 Payerne (CH)
(72) Erfinder: Ansermet, Patrice, 1530 Payerne (CH); Isele, Rolf, 78199 Bräunlingen (DE)
(74) Vertreter: Klunker . Schmitt-Nilson . Hirsch

(57) **Zusammenfassung**

Bei einem Verfahren und einem System zum Erfassen der Einsatzdaten von Bodenflächenbearbeitungsfahrzeugen oder -geräten werden die Standortdaten und Zeitdaten mittels eines von der Fahrzeug- oder Gerätesteuerung örtlich getrennten, tragbaren mobilen Telekommunikationsendgeräts (10) erfasst und an die Steuerung (C) des Fahrzeugs oder Geräts bzw. dessen Bedienpult (150) übertragen. Außerdem können Betriebsparameter, wie Streubreite, Streudichte, etc. mittels des Telekommunikationsendgeräts an die Fahrzeug- oder Gerätesteuerung (C) übertragen werden, vorzugsweise drahtlos. Auch die Kommunikation mit einem externen Rechner (501) bzw. einer zentralen Leitstelle (500) erfolgt vorzugsweise über das mobile Telekommunikationsendgerät, wie beispielsweise ein Smartphone. Dazu ist eine entsprechende Anwendungssoftware (50) als Applikation auf dem Telekommunikationsendgerät installiert.

## Beschreibung

Die Erfindung betrifft ein Verfahren sowie ein System zum Erfassen der Einsatzdaten von Fahrzeugen und/ oder Geräten bei der Bearbeitung von Bodenflächen, insbesondere im Zusammenhang mit Kommunaltechnikfahrzeugen und -geräten im Winterdienst und/oder Sommerdienst. Typische Winterdienstfahrzeuge bzw. -geräte dienen zum Schneeräumen, zum Beispiel mittels Schneepflügen, Schneefräsen und Kehrbläsern, sowie Streuen, Sprühen und Enteisen. Typische Sommerdienstfahrzeuge und -geräte dienen der Straßenreinigung, zum Beispiel zum Kehren und Schwemmen. Andere Bodenflächenbearbeitungsfahrzeuge und -geräte werden beispielsweise im Straßenbau eingesetzt.

Dazu werden die Betriebsparameter zum Bearbeiten der mittels des Fahrzeugs oder Geräts zu bearbeitenden Bodenfläche an einem Bedienpult eingestellt, das Fahrzeug oder Gerät entlang der zu bearbeitenden Bodenfläche bewegt und die Bodenfläche mittels des Fahrzeugs oder Geräts entsprechend der eingestellten Betriebsparameter während des Bewegens bearbeitet, wobei das Bearbeiten mittels einer mit dem Fahrzeug oder Gerät verbundenen Fahrzeug- oder Gerätesteuerung gesteuert wird.

Um derartige Dienste möglichst wirtschaftlich und effizient zu gestalten, werden die Einsatzdaten der Betriebsdienstfahrzeuge für eine Vielfalt von Geräten mit GPS-Ortung erfasst. Unter den Begriff der Einsatzdaten fallen einerseits die für den Betrieb des Fahrzeugs oder Geräts konkret eingestellten Betriebsparameter, insbesondere sogenannte Bedienpultdaten wie z.B. die Streubreite, Streudichte, Streubildlage, Streustoffart und/oder Stellung eines Schneepflugs (oben/unten), sowie z.B. die Geschwindigkeit, und andererseits weitere mit dem Einsatz zusammenhängende Daten, insbesondere Standortdaten und Zeitdaten aber gegebenenfalls auch der Name oder eine Identifikation des Fahrzeugführers und dergleichen mehr. Für die zeitlich und örtlich erfassten Einsatzdaten können demnach unter anderem Angaben wie Räum- und Streuroute, Reinigungsroute, Straßenname und -kategorie, Einsatzart, eingesetzte Geräte, ausgebrachte Streumenge, Streudichte, Streubreite, Streubildlage, Streustoffart, Umfeldbedingungen (Fahrbahntemperatur, Lufttemperatur) sowie Angaben zum Fahrzeugführer gehören. Mittels dieser Angaben können die ordnungsgemäße Erfüllung der Verkehrssicherungspflicht nachgewiesen und Haftungsansprüche abgewehrt werden.

Zu diesem Zweck weist das Fahrzeug oder Gerät eine fest mit dem Fahrzeug oder Gerät verbundene Steuerung auf, welche einerseits ein Bedienpult zum Einstellen der Betriebsparameter umfasst und welches andererseits alle relevanten Einsatzdaten aufzeichnet. Die Steuerung umfasst darüber hinaus insbesondere einen GPS-Empfänger und eine Uhr für die zeitlich und örtlich korrelierte Datenerfassung.

Die erfassten Daten können dann automatisch online während des Einsatzes oder offline nach dem Einsatz an eine externe Datenbank zur dortigen Verarbeitung und Auswertung übertragen werden. Zu diesem Zweck besitzt die Fahrzeug- oder Gerätesteuerung eine externe Schnittstelle zum Anschließen eines Datenträgers für die Offline-Datenübertragung oder eines Telekommunikationsgeräts für die Online-Datenübertragung (z.B. mittels GSM(SMS), GPRS oder WLAN). Im Falle der Online-Kommunikation können die Einsatzdaten, einschließlich der Fahrzeugstandortdaten, auf einer dynamischen Karte an einem externen Rechner z.B. einer zentralen Leitstelle während des laufenden Einsatzes verfolgt und für eine dynamische Routenplanung der Einsätze berücksichtigt werden.

Aufgabe der vorliegenden Erfindung ist es, den technischen Umfang der fest mit dem Fahrzeug oder Gerät verbundenen Fahrzeug- oder Gerätesteuerung zu reduzieren und dadurch letztlich Kosten zu sparen.

Diese Aufgabe wird durch ein Verfahren und ein System mit den Merkmalen der nebengeordneten Patentansprüche gelöst. In davon abhängigen Ansprüchen sind vorteilhafte Weiterbildungen und Ausgestaltungen der Erfindung angegeben.

Dementsprechend sieht eine bevorzugte Ausführungsform der Erfindung vor, die Standortdaten eines Bodenflächenbearbeitungsfahrzeugs oder örtlich fortbewegten Bodenflächenbearbeitungsgeräts auf einem von der Fahrzeug- oder Gerätesteuerung örtlich getrennten, tragbaren mobilen Telekommunikationsendgerät zu erfassen. Besonders geeignet sind herkömmliche Smartphones oder Tablet-PCs, da sie von Haus aus mit einem GNSS-Standorterfassungssensor (Global Navigation Satellite System), z.B. mit einem GPS-Empfänger, und einem Zeitmesser ausrüstet sind. Aber auch Laptops, insbesondere Mini-Laptops, soweit sie eine Standorterfassungseinrichtung, insbesondere also einen GPS-Empfänger, enthalten, sind geeignet.

Die Fahrzeug- oder Gerätesteuerung, welche mit dem Telekommunikationsendgerät in Kontakt steht, benötigt dann keinen eigenen GPS-Empfänger mehr. Darüber hinaus besteht die Möglichkeit, dasselbe Telekommunikationsendgerät im Zusammenhang mit unterschiedlichen Bodenflächenbearbeitungsfahrzeugen oder -geräten einzusetzen, so dass letztendlich nur eine einzige Standorterfassungseinrichtung, zum Beispiel ein GPS-Empfänger, des Telekommunikationsendgeräts anstelle vieler Standorterfassungseinrichtungen an jedem der Fahrzeuge oder Geräte benötigt wird.

Bevorzugt erfolgt die Standortbestimmung rein geräteseitig mittels des Telekommunikationsendgeräts unter Verwendung eines GNSS-Empfängers, beispielsweise GPS, Galileo, GLONASS oder QZSS.

Alternativ kann der Standort des Gerätes durch GSM-Ortung bestimmt werden. GSM-Ortung bezeichnet die Ortsbestimmung eines eingeschalteten und in ein Funknetz eingebuchten, auf der Basis von Global System for Mobile Communications (GSM) betriebenen Endgerätes durch das Mobilfunknetz. Die Ergebnisse sind nicht ganz so exakt wie bei der Verwendung von GNSS, welches bis auf 5 m exakt sein kann, kommen dieser Genauigkeit aber teilweise recht nahe mit beispielsweise 25 m beim U-TDOA Verfahren (netzseitiges System "Up-link Time Difference Of Arrival") und E-OTD (netz- und geräteseitiges System "Enhanced Observed Time Difference"). Bei diesen beiden zuletzt genannten GSM-Ortungssystemen wird die Position des Endgerätes anhand der Laufzeiten der Signale zwischen dem Endgerät und mehreren Basisstationen ermittelt. Diese Positionsbestimmung funktioniert, sobald Funkkontakt zu mehreren Basisstationen besteht, insbesondere also in dichter besiedelten Gebieten.

Darüber hinaus besteht auch die Möglichkeit der WLAN-basierten Ortung, die sich insbesondere für die Ortung innerhalb von Gebäuden, wie beispielsweise Bahnhöfen, anbietet. Die WLAN-basierte Ortung eignet sich für alle WLAN-fähigen Endgeräte.

Schließlich bestehen noch weitere Möglichkeiten, den Standort des Telekommunikationsendgeräts zu bestimmen, etwa mittels externen Bluetooth.

Insbesondere in städtischer Umgebung, wo die freie Sicht auf die GNSS-Satelliten oft stark eingeschränkt ist, sowie in geschlossenen Räumen, insbesondere Tunneln, bietet sich die GSM-Ortung und WLAN-basierte Ortung als Alternative und insbesondere auch zur Unterstützung der GNSS-Positionsbestimmung an. Als Sonderform der GNSS-Positionsbestimmung gibt es das A-GNSS Verfahren (Assisted GNSS), im Falle von GPS also das A-GPS, bei dem zur Positionsbestimmung notwendige Hilfsdaten z.B. vom GSM-Mobilfunknetz dem Endgerät zur Verfügung gestellt werden. A-GPS wird in den meisten Mobilfunktelefonen und GSM-fähigen Navigationsgeräten genutzt und ist in den europäischen GSM-Mobilfunknetzen durchgängig verfügbar.

Gemäß einer ersten, einfachen Ausführungsform der Erfindung werden die mittels des Telekommunikationsendgeräts erfassten Standortdaten oder gegebenenfalls daraus abgeleitete Daten, wie zum Beispiel die konkrete Länge einer zurückgelegten Strecke, vom Telekommunikationsendgerät an die Fahrzeug- oder Gerätesteuerung übertragen.

Die Übertragung erfolgt über eine "interne" Schnittstelle entweder mittels eines Verbindungskabels, z.B. über einen USB-Anschluss, oder vorzugsweise drahtlos, beispielsweise über Bluetooth oder WLAN. Dazu dient eine auf dem Telekommunikationsendgerät lauffähige Anwendungssoftware, die entsprechend angepasst ist, die Einsatzdaten zwischen dem Telekommunikationsendgerät und der Fahrzeug- oder Gerätesteuerung zu übermitteln.

Vorzugsweise werden nicht nur Standortdaten sondern auch Zeitdaten mittels des Telekommunikationsendgeräts erfasst und für die Einsatzdatenerfassung zur Verfügung gestellt. Die auf dem Telekommunikationsendgerät laufende Anwendungssoftware kann bei dieser ersten, einfachen Ausführungsform sehr einfach gehalten werden, weil bis auf die Standorterfassungsfunktion und gegebenenfalls Zeiterfassungsfunktion alle weiteren Funktionalitäten in der Fahrzeug- oder Gerätesteuerung verbleiben können. Die gesamten Einsatzdaten können dann in herkömmlicher Weise online über Funk und/ oder offline per Datenträger an einen externen Rechner überragen werden.

Gemäß einer zweiten Ausführungsform werden nicht nur die Standorterfassungsfunktion und gegebenenfalls der Zeitmesser des Telekommunikationsendgeräts genutzt sondern darüber hinaus auch dessen Telekommunikationsfähigkeit als solche, um nämlich z.B. die Standort- und Zeitdaten per Mobilfunk an einen externen Rechner, beispielsweise an eine zentrale Leitstelle, zu übertragen. Dies erfolgt über eine "externe" Schnittstelle des Telekommunikationsendgeräts vorzugsweise unter Verwendung der Mobilfunknetzwerke üblicher Telekommunikationsdienstleister.

Die Fahrzeug- oder Gerätesteuerung braucht ihrerseits dann nicht mehr für den Mobilfunk ausgerüstet zu werden. Statt dessen sieht eine weiter bevorzugte Ausführungsform der Erfindung vor, dass Einsatzdaten von der Fahrzeug- oder Gerätesteuerung über die interne Schnittstelle an das Telekommunikationsendgerät übermittelt werden, insbesondere die für das Bearbeiten der Bodenflächen eingestellten Betriebsparameter oder aus diesen Betriebsparametern abgeleitete Daten. Diese können dann zusammen mit den weiteren Einsatzdaten, wie den vom Telekommunikationsendgerät erfassten Standortdaten und gegebenenfalls Zeitdaten, über die externe Schnittstelle des Telekommunikationsendgeräts, also vorzugsweise online während des Einsatzes per Mobilfunk, an einen externen Rechner von z.B. einer Zentralleitstelle zur Weiterverarbeitung übertragen werden. Die auf dem Telekommunikationsendgerät lauffähige Anwendungssoftware ist bei dieser zweiten Ausführungsform der Erfindung entsprechend komplexer, weil sie sowohl dazu eingerichtet ist, Daten über die interne Schnittstelle von der Fahrzeug- oder Gerätesteuerung zu empfangen und zusammen mit den Standortdaten und Zeitdaten über die externe Schnittstelle wieder auszugeben. Eine Übertragung der Standortdaten und gegebenenfalls der Zeitdaten in umgekehrter Richtung, vom Telekommunikationsendgerät an die Fahrzeug- oder Gerätesteuerung, kann bei dieser Ausführungsvariante bedarfsweise entfallen.

Eine Weiterbildung der Erfindung sieht vor, dass einzelne oder alle Betriebsparameter, die für die Bearbeitung der Bodenfläche an dem Fahrzeug oder Gerät eingestellt werden müssen, am Telekommunikationsendgerät eingegeben und von dort an die Fahrzeug- oder Gerätesteuerung übertragen werden. Die Anwendungssoftware wird dann entsprechend um diese Funktionalität erweitert. Die Eingabemöglichkeiten an den heute üblichen Smartphones und Tablet-PCs sind sehr bequem, ausgereift und funktionssicher. Insbesondere die Bedienung und Anzeige über Touch-Screens dieser Geräte lässt sich für die erfindungsgemäßen Zwecke besonders gut nutzen. Im Extremfall kann die gesamte Bedienungsfunktionalität der Fahrzeug- oder Gerätesteuerung auf das Telekommunikationsendgerät verlagert werden und die Fahrzeug- oder Gerätesteuerung kann gegebenenfalls ganz ohne eigenes Bedienpult und/ oder Display auskommen. So kann beispielsweise eine Bedienperson mittels ein und desselben Telekommunikationsendgeräts nacheinander mehrere Fahrzeuge oder Geräte mit unterschiedlichen Anbauten führen, wenn die Anwendungssoftware für diese verschiedenen Nutzungsarten entsprechend eingerichtet ist oder/und wenn entsprechend unterschiedliche Anwendungssoftwares auf dem Telekommunikationsendgerät installiert sind. Statt mehrerer fahrzeuggebundener Bedienpulte kann dann ein personengebundenes Telekommunikationsendgerät eingesetzt werden.

Die auf dem Telekommunikationsendgerät laufende Anwendungssoftware kann weiter vorteilhaft dazu eingerichtet sein, die Einsatzdaten zumindest teilweise auszuwerten. Beispielsweise können die zurückgelegte Entfernung, ausgestreute Streugutmenge, Einsatzdauer und dergleichen schon mit der Anwendungssoftware ermittelt werden. Dadurch lassen sich Ressourcen einsparen, beispielsweise weil die Bedienperson während einer Einsatzpause noch vor der Rückkehr zur Einsatzzentrale eine Auswertung der Einsatzdaten am Telekommunikationsendgerät vornehmen kann und/ oder weil der Zentralrechner der Leitstelle aufgrund der Vorauswertung der Einsatzdaten im Telekommunikationsendgerät weniger Daten zu verarbeiten hat.

Weiterhin ist es möglich, dass der Fahrzeug- oder Gerätesteuerung Einsatzdaten von einem externen Rechner, zum Beispiel von einer zentralen Leitstelle, über das Telekommunikationsendgerät zugeleitet werden. Dabei kann es sich beispielsweise um Bodentemperaturen oder andere Straßenzustandsinformationen handeln, die über entsprechende Messstellen lokal erfasst und dem Einsatzfahrzeug von der Leitstelle zur Verwendung auf der jeweiligen Einsatzfahrt kontinuierlich (online) mitgeteilt werden.

Eine weitere Ausgestaltung der Erfindung sieht vor, dass mehrere solcher Telekommunikationsendgeräte beim gemeinsamen Einsatz mehrerer Bodenflächenbearbeitungsfahrzeuge oder -geräte miteinander gekoppelt werden. Dabei werden Einsatzdaten zwischen den Telekommunikationsendgeräten übertragen, wobei vorzugsweise ein Telekommunikationsendgerät das "Master"-Gerät darstellt, auf welchem die verschiedenen Einsatzdaten gebündelt und gegebenenfalls vorausgewertet werden, bevor sie vom Master-Gerät zur weiteren Verwertung an einen externen Rechner, zum Beispiel an eine zentrale Leitstelle, übermittelt werden.

Die Applikationssoftware auf dem Telekommunikationsendgerät bzw. den Telekommunikationsendgeräten ist vorzugsweise so ausgebildet, dass die Applikation selbsttätig eine Verbindung mit der Steuerung des Bodenflächenbearbeitungsfahrzeugs oder -geräts aufbauen kann, wenn die Applikation geöffnet wird. Im Falle mehrerer miteinander gekoppelter Telekommunikationsendgeräte ist die darauf jeweils laufende Applikationssoftware vorzugsweise so eingerichtet, dass sich die Telekommunikationsendgeräte bei einem im Master-Modus betriebenen Master-Gerät automatisch einloggen, wenn die betreffende Applikation offen ist oder geöffnet wird.

Nachfolgend wird die Erfindung beispielhaft anhand der begleitenden Zeichnungen erläutert. Darin zeigen:
- Figur 1: ein System zum Erfassen von Einsatzdaten eines Bodenflächenbearbeitungsfahrzeugs oder eines örtlich fortbewegten Bodenflächenbearbeitungsgeräts gemäß einem ersten Ausführungsbeispiel,
- Figur 2: ein System zum Erfassen von Einsatzdaten eines Bodenflächenbearbeitungsfahrzeugs oder eines örtlich fortbewegten Bodenflächenbearbeitungsgeräts gemäß einem zweiten Ausführungsbeispiel,
- Figur 3: ein System zum Erfassen von Einsatzdaten eines Bodenflächenbearbeitungsfahrzeugs oder eines örtlich fortbewegten Bodenflächenbearbeitungsgeräts gemäß einem dritten Ausführungsbeispiel,
- Figur 4: ein System zum Erfassen von Einsatzdaten eines Bodenflächenbearbeitungsfahrzeugs oder eines örtlich fortbewegten Bodenflächenbearbeitungsgeräts gemäß einem vierten Ausführungsbeispiel,
- Figur 5: ein System zum Erfassen von Einsatzdaten eines Bodenflächenbearbeitungsfahrzeugs oder eines örtlich fortbewegten Bodenflächenbearbeitungsgeräts gemäß einem fünften Ausführungsbeispiel, und
- Figur 6: ein System zum Erfassen von Einsatzdaten eines Bodenflächenbearbeitungsfahrzeugs oder eines örtlich fortbewegten Bodenflächenbearbeitungsgeräts gemäß einem sechsten Ausführungsbeispiel.

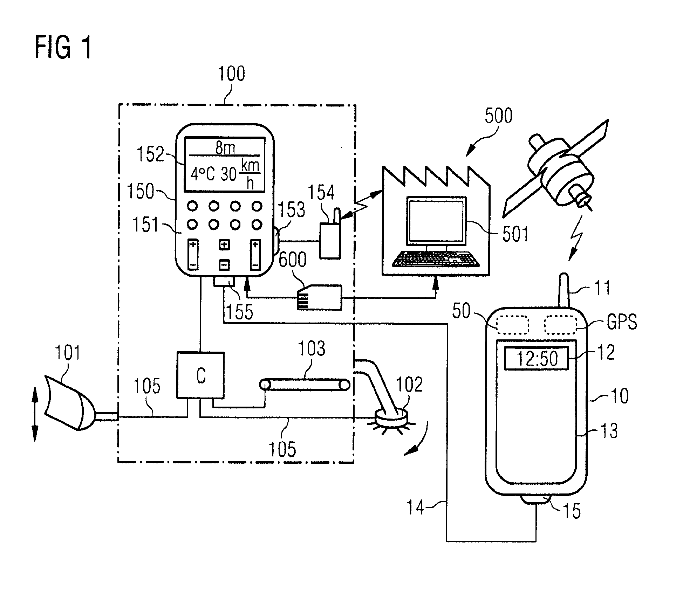

Figur 1 zeigt ein System zum Erfassen von Einsatzdaten eines Bodenflächenbearbeitungsfahrzeugs oder eines örtlich fortbewegten Bodenflächenbearbeitungsgeräts.
Das Fahrzeug bzw. Gerät 100 ist schematisch als Blackbox mittels Strichlinien angedeutet. Das Fahrzeug oder Gerät 100 besitzt verschiedene Anbauten, von denen in Figur 1 lediglich ein Schneepflug 101, ein Streuteller 102 und ein Streustoffförderband 103 beispielhaft dargestellt sind. Das Fahrzeug oder Gerät 100 besitzt insbesondere eine Steuerung C, welche über Steuerleitungen 105 mit den Anbauten und Einrichtungen 101-103 zur Steuerung derselben verbunden ist. Darüber hinaus weist das Fahrzeug oder Gerät 100 ein Bedienpult 150 auf, welches am Fahrzeug oder Gerät 100 installiert ist und welches als Teil der Steuerung C mit der Steuerung C in Verbindung steht. Das Bedienpult 150 umfasst ein Tastenfeld 151 und ein Display 152.
Das Display 152 kann als Touch-Screen ausgeführt sein und einzelne oder alle Schaltflächen des Bedienfelds 151 mit umfassen. Die über das Bedienpult 150 eingegebenen Betriebsparameter werden in der Steuerung C entsprechend verarbeitet und umgewandelt, um die Anbauten 101-103 entsprechend zu steuern. Das Bedienpult 150 mit dem Tastaturfeld 151 und Display 152 bildet somit als Aus- und Eingabeschnittstelle für die Steuerung C einen Teil der Steuerung C. Lediglich beispielhaft sind im Display 152 die Streubreite mit 8 m, die Außentemperatur mit 4°C und die aktuelle Fahrgeschwindigkeit mit 30 km/h angegeben. Weitere auf dem Display angezeigte Einsatzdaten können beispielsweise die Bodentemperatur, die Streubildlage, die Schneepflugstellung, das Streustoff-Sole-Mischungsverhältnis und dergleichen mehr sein. Über die Schaltflächen des Tastaturfelds 151 können einzelne dieser Betriebsparameter aufgerufen und per Hand eingestellt oder korrigiert werden. Andere Einsatzdaten, die für die Einstellung der Betriebsparameter von Bedeutung sein können,
wie zum Beispiel die Bodentemperatur, werden über eine externe Schnittstelle 153 des Bedienpults von einer zentralen Leitstelle 500 über Funk empfangen. Dazu ist ein Funkempfänger 154 an die externe Schnittstelle 153 des Bedienpults 150 angeschlossen.

Der Funkempfänger 154 ist vorzugsweise als Sende-Empfänger ausgebildet, so dass Einsatzdaten vom Fahrzeug bzw. Gerät 100 auch an einen externen Rechner 501 in der zentralen Leitstelle 500 gesendet und dort weiterverarbeitet werden können. Alternativ oder zusätzlich kann eine Hardwareschnittstelle, zum Beispiel ein USB-Port, für einen elektronischen Datenträger 600 am Bedienpult 150 vorgesehen sein, auf dem die Einsatzdaten gespeichert werden können, um sie anschließend "offline" an den externen Rechner 501 übergeben zu können.

Wesentlich für die wirtschaftliche und effiziente Gestaltung der Einsatzdatenerfassung ist die Korrelation der Einsatzdaten mit Ortsdaten und Zeitdaten. Die Ortsdaten werden mittels eines tragbaren mobilen Telekommunikationsendgeräts 10 erfasst, welches eine Standorterfassungs einrichtung, hier beispielhaft einen GPS-Empfänger GPS, aufweist. Das Telekommunikationsendgerät ist vorzugsweise ein mobilfunkfähiges Smartphone oder Tablet-PC. Über eine Antenne 11 empfängt die Standorterfassungs einrichtung Bahndaten möglichst vieler Satelliten und bestimmt daraus die Ortskoordinaten zu seinem jeweiligen Standort, der, wenn das Telekommunikationsendgerät 10 mit dem Fahrzeug oder Gerät 100 mitbewegt wird, den Standortdaten des Fahrzeugs oder Geräts 100 entspricht. Diese Ortsbestimmung kann durch GSM und/ oder WLAN unterstützt werden und dadurch noch exakter erfolgen. Darüber hinaus weist das Telekommunikationsendgerät 10 eine Uhr für die Zeitdatenerfassung auf, wobei die Zeitdaten 12 der Uhr auf einem Display 13 des Telekommunikationsendgeräts 10 angezeigt werden können. Das Telekommunikationsendgerät 10 besitzt eine Kommunikationsschnittstelle 15 über die es mittels eines entsprechenden Kabels 14 an einer zugehörigen Kommunikationsschnittstelle 155 des Bedienpults 150 anschließbar ist. Darüber werden die Standortdaten sowie die Zeitdaten an das Bedienpult 150 geleitet, damit sie dort als Einsatzdaten zur Verfügung stehen und gegebenenfalls weiterverarbeitet und insbesondere weitergeleitet werden, entweder online über den Sende-Empfänger 154 oder offline über den Datenträger 600. Um diese Funktionalitäten auf dem Telekommunikationsendgerät zur Verfügung zu stellen, ist darauf eine entsprechend eingerichtete Anwendungssoftware 50 als Applikation (App) installiert.

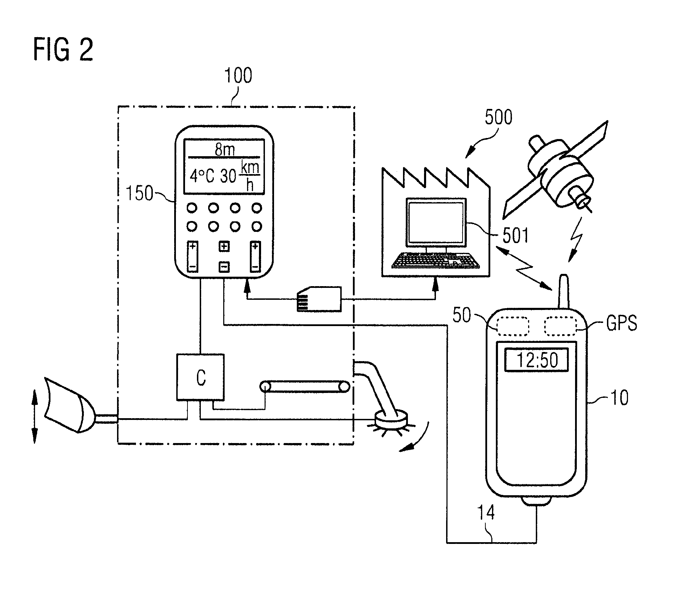

Das Ausführungsbeispiel gemäß Figur 2 unterscheidet sich vom Ausführungsbeispiel gemäß Figur 1 allein dadurch, dass auf eine Funkverbindung zwischen dem Fahrzeug oder Gerät 100 bzw. dessen Bedienpult 150 und dem externen Rechner 501 verzichtet wird. Stattdessen wird die Kommunikation über die Mobilfunkeinrichtung des Telekommunikationsendgeräts 10 durchgeführt. Dementsprechend werden sowohl für den Betrieb relevante Einsatzdaten, wie zum Beispiel örtliche Bodentemperaturen, von der Leitstelle 500 über das Telekommunikationsendgerät 10 und die Verbindungsleitung 14 an die Steuerung C des Fahrzeugs oder Geräts 100 bzw. an dessen Bedienpult 150 geleitet. Umgekehrt werden die Einsatzdaten des Fahrzeugs oder Geräts 100 von der Steuerung C bzw. dessen Bedienpult 150 über die Verbindungsleitung 14 an das Telekommunikationsendgerät 10 und von dort weiter per Mobilfunk an den externen Rechner 501 bzw. an die zentrale Leitstelle gesendet, beispielsweise per SMS, GPRS, Email und dergleichen.

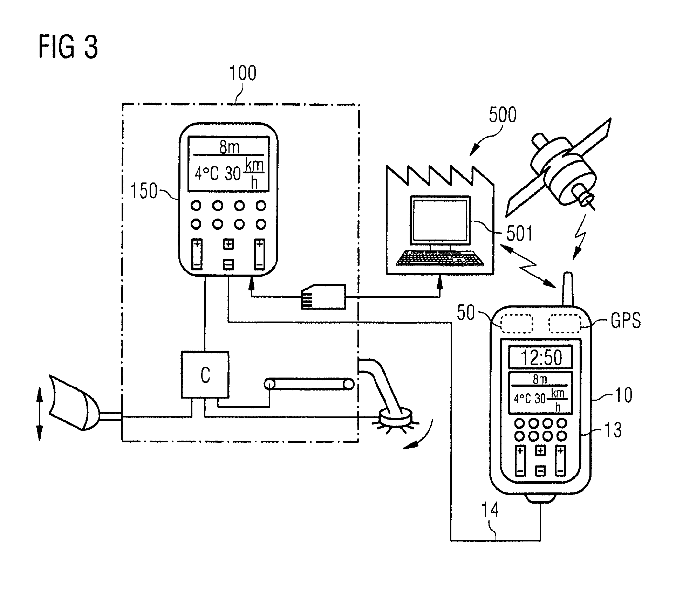

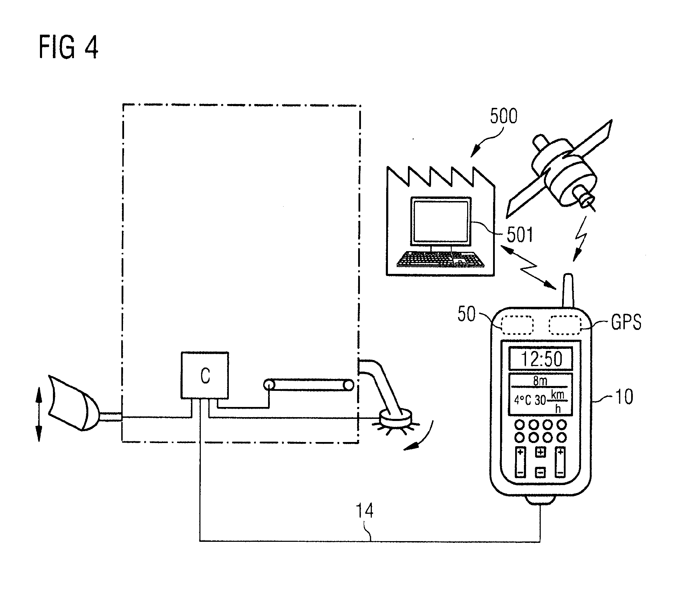

Das Ausführungsbeispiel gemäß Figur 3 unterscheidet sich von dem Ausführungsbeispiel gemäß Figur 2 dadurch, dass einzelne oder alle Betriebsparameter für den Betrieb des Fahrzeugs oder Geräts 100 unmittelbar am Telekommunikationsendgerät 10 eingegeben werden können. Dazu werden auf dem Display 13 des Telekommunikationsendgeräts 10 die Funktionalitäten des Bedienpults 150 dargestellt, wobei das Display 13 vorzugsweise als Touch-Screen ausgebildet ist. Die eingestellten Betriebsparameter werden dann über die Leitung 14 an die Steuerung 10 bzw. an dessen Bedienpult 150 übertragen. Die Eingabe braucht somit nicht mehr am Bedienpult 150 selbst vorgenommen zu werden. Im Extremfall kann auf das Bedienpult 150 auch ganz verzichtet werden und die Verbindungsleitung 14 unmittelbar an die Steuerung C angeschlossen werden, so wie dies im Ausführungsbeispiel gemäß Figur 4 dargestellt ist.

Bei den Ausführungsbeispielen gemäß Figuren 3 und 4 erfolgt die Datenkommunikation mit dem externen Rechner 501 bzw. der zentralen Leitstelle über den Mobilfunkanschluss des Telekommunikationsendgeräts 10. Dies ist aber nicht zwingend. Dieser Datenaustausch kann auch, wie beim Ausführungsbeispiel gemäß Figur 1, unmittelbar über die Steuerung C bzw. dessen Bedienpult 150 des Fahrzeugs oder Geräts 100 stattfinden.

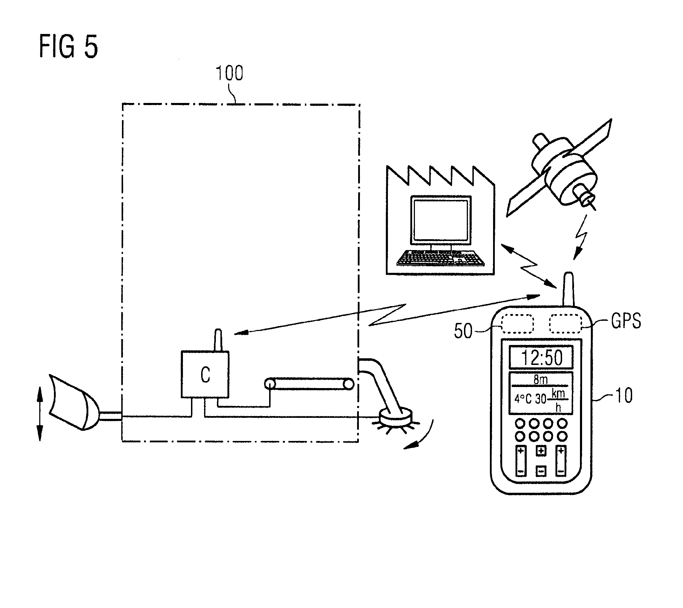

Besonders bevorzugt ist es, wenn die Kommunikation zwischen dem Telekommunikationsendgerät 10 und der Steuerung C, wie in Figur 5 gezeigt, oder dem Bedienpult 150 der Steuerung C drahtlos erfolgt, beispielsweise per Bluetooth, WLAN oder dergleichen. Ein aufwändiges mechanisches Koppeln des Telekommunikationsendgeräts 10 an die Steuerung C des Fahrzeugs oder Geräts 100 erübrigt sich dann. Besonders bevorzugt ist es, wenn das System so eingerichtet ist, dass die auf dem Telekommunikationsendgerät laufende Applikation 50 automatisch eine Verbindung mit der Steuerung C des Fahrzeugs oder Geräts 100 aufbaut, wenn es in Funkreichweite zu diesem ist und die Applikation 50 geöffnet wird oder offen ist.

Je nach Komplexität der Ausführungsbeispiele gemäß den Figuren 1 bis 5 ist die auf dem Telekommunikationsendgerät 10 laufende Applikation 50 entsprechend mehr oder weniger umfangreich ausgebildet, um die erforderlichen Funktionalitäten zur Verfügung zu stellen.

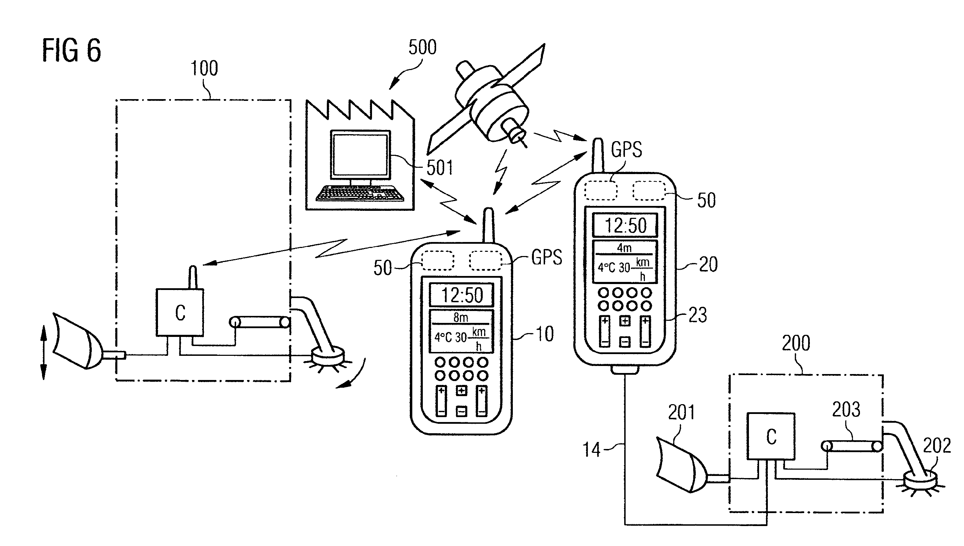

Bei einem weiteren Ausführungsbeispiel gemäß Figur 6 sind mehrere Telekommunikationsendgeräte 10, 20 über Funk miteinander gekoppelt, von denen das Telekommunikationsendgerät 10 die Masterfunktion übernimmt. Das heißt, die Kommunikation mit dem externen Rechner 501 bzw. der zentralen Leitstelle 500 erfolgt nur über das Master-Telekommunikationsendgerät 10. Der Austausch von Einsatzdaten zwischen den anderen Telekommunikationsendgeräten 20 und dem zentralen Rechner 501 erfolgt dementsprechend mittels des Master-Geräts 10, vorzugsweise online über die Mobilfunkverbindung des Master-Geräts 10.

Eine derartige Konstellation ist beispielsweise praktisch beim Winterdienst auf Flughäfen, wo mehrere Winterdienstfahrzeuge in koordinierter Weise Landebahnen und Rollfelder von Schnee frei räumen. Die Slave-Telekommunikationsendgeräte 20 sind dementsprechend jeweils mit der Steuerung C eines zugeordneten Fahrzeugs oder Geräts 200 verbunden und wirken gegebenenfalls, je nach Ausführungsform, bei der Steuerung der zugehörigen Anbauten, wie Schneepflug 201, Streuteller 202 und Förderband 203 mit, wobei die eingestellten Betriebsparameter, wie zum Beispiel die eingestellte Streubreite, unterschiedlich sein können.

## Patentansprüche

1. Verfahren zum Erfassen von Einsatzdaten eines Bodenflächenbearbeitungsfahrzeugs oder eines örtlich fortbewegten Bodenflächenbearbeitungsgeräts (100), insbesondere zur Kommunalflächenbearbeitung im Winter- und/ oder Sommerdienst, umfassend die Schritte:
- Einstellen von Betriebsparametern für das Bearbeiten einer mittels des Fahrzeugs oder Geräts zu bearbeitenden Bodenfläche,
- Bewegen des Fahrzeugs oder Geräts entlang der zu bearbeitenden Bodenfläche,
- Bearbeiten der Bodenfläche mittels des Fahrzeugs oder Geräts entsprechend der eingestellten Betriebsparameter während des Bewegens, wobei das Bearbeiten mittels einer mit dem Fahrzeug oder Gerät verbundenen Fahrzeug- oder Gerätesteuerung (C, 150) gesteuert wird,
- Erfassen von Standortdaten des Fahrzeugs oder Geräts unter Verwendung eines Standorterfassungssystems (GPS) während des Bewegens,
**dadurch gekennzeichnet, dass** das Erfassen der Standortdaten auf einem von der Fahrzeug- oder Gerätesteuerung örtlich getrennten, tragbaren mobilen Telekommunikationsendgerät (10), wie z.B. einem Smartphone, erfolgt und dass Einsatzdaten zwischen der Fahrzeug- oder Gerätesteuerung und dem Telekommunikationsendgerät übermittelt werden, vorzugsweise drahtlos, wobei es sich bei den übermittelten Einsatzdaten zumindest um eines oder mehrerer der folgenden Daten handelt: (a) unter der Verwendung des Standorterfassungssystems (GPS) erfasste Standortdaten, (b) aus den erfassten Standortdaten abgeleitete Daten, (c) für das Bearbeiten eingestellte Betriebsparameter und (d) aus den eingestellten Betriebsparametern abgeleitete Daten.

2. Verfahren nach Anspruch 1, wobei zumindest ein oder mehrere der Betriebsparameter am Telekommunikationsendgerät (10) eingestellt und diese Betriebsparameter und/ oder daraus abgeleitete Daten an die Fahrzeug- oder Gerätesteuerung (C) übermittelt werden.

3. Verfahren nach Anspruch 1 oder 2, wobei zumindest ein oder mehrere der Betriebsparameter an der Fahrzeug- oder Gerätesteuerung (C) eingestellt und diese Betriebsparameter und/ oder daraus abgeleitete Daten an das Telekommunikationsendgerät (10) übermittelt werden.

4. Verfahren nach einem der Ansprüche 1 bis 3, wobei das Erfassen der Standortdaten des Fahrzeugs oder Geräts (100) unter Verwendung eines satellitengestützten Verfahrens (GNSS), bevorzugt mittels eines Galileo- oder GPS-Empfängers (GPS) des Telekommunikationsendgeräts (10), erfolgt.

5. Verfahren nach einem der Ansprüche 1 bis 4, umfassend den weiteren Schritt des Erfassens von Zeitdaten als weitere Einsatzdaten mittels des Telekommunikationsendgeräts (10).

6. Verfahren nach einem der Ansprüche 1 bis 5, umfassend den weiteren Schritt des Auswertens der Einsatzdaten in einer Anwendungssoftware (50) auf dem Telekommunikationsendgerät (10).

7. Verfahren nach einem der Ansprüche 1 bis 6, umfassend den weiteren Schritt des Versendens von Einsatzdaten oder von aus Einsatzdaten abgeleiteten Daten mittels des Telekommunikationsendgeräts (10) an einen externen Rechner (501).

8. Verfahren nach einem der Ansprüche 1 bis 7, umfassend den weiteren Schritt des Empfangens von Einsatzdaten mittels des Telekommunikationsendgeräts (10) von einem externen Rechner (501).

9. Verfahren nach einem der Ansprüche 1 bis 8, umfassend den weiteren Schritt des Koppelns des Telekommunikationsendgeräts (10) mit mindestens einem weiteren Telekommunikationsendgerät (20), das in ein Verfahren nach einem der Ansprüche 1 bis 8 in Bezug auf ein anderes Bodenflächenbearbeitungsfahrzeug oder örtlich fortbewegten Bodenflächenbearbeitungsgeräts (200) eingebunden ist, wobei Einsatzdaten zwischen den Telekommunikationsendgeräten (10, 20) übermittelt werden.

10. System zum Erfassen von Einsatzdaten eines Bodenflächenbearbeitungsfahrzeugs oder eines örtlich fortbewegten Bodenflächenbearbeitungsgeräts (100), insbesondere zur Kommunalflächenbearbeitung im Winter- und/ oder Sommerdienst, umfassend eine mit dem Fahrzeug oder Gerät verbundene Fahrzeug- oder Gerätesteuerung (C), welche eingerichtet ist, das Fahrzeug oder Gerät anhand vorgegebener Betriebsparameter für die Bearbeitung einer zu bearbeitenden Bodenfläche zu steuern, und eine Standorterfassungseinrichtung (GPS), **gekennzeichnet durch** ein von der Fahrzeug- oder Gerätesteuerung (C) örtlich getrenntes, tragbares mobiles Telekommunikationsendgerät (10), wie z.B. ein Smartphone, wobei die Standorterfassungseinrichtung (GPS) Teil des Telekommunikationsendgeräts (10) ist, und eine auf dem Telekommunikationsendgerät (10) lauffähige Anwendungssoftware (50) für das Übermitteln von Einsatzdaten zwischen der Fahrzeug- oder Gerätesteuerung (C) und dem Telekommunikationsendgerät (10).

11. System nach Anspruch 10, umfassend eine interne Kommunikationsschnittstelle (15,155), wobei das System dazu eingerichtet ist, zumindest einen oder mehrere der Betriebsparameter und/ oder daraus abgeleitete Daten von der Fahrzeug- oder Gerätesteuerung (C) über die interne Kommunikationsschnittstelle an das Telekommunikationsendgerät (10) und/ oder von dem Telekommunikationsendgerät (10) über die interne Kommunikationsschnittstelle an die Fahrzeug- oder Gerätesteuerung (C) zu übermitteln.

12. System nach einem der Ansprüche 10 oder 11, wobei die Standorterfassungseinrichtung (GPS) einen Satelliten-Empfänger, bevorzugt einen Galileo- oder GPS-Empfänger, umfasst.

13. System nach einem der Ansprüche 10 bis 12, wobei das Telekommunikationsendgerät (10) eine Zeitdatenerfassung umfasst und die Anwendungssoftware (50) eingerichtet ist, Zeitdaten der Zeitdatenerfassung als Einsatzdaten zu verarbeiten.

14. System nach einem der Ansprüche 10 bis 14, wobei die Anwendungssoftware (50) eingerichtet ist, die Einsatzdaten auszuwerten.

15. System nach einem der Ansprüche 10 bis 14, umfassend eine externe Kommunikationsschnittstelle (11), wobei die Anwendungssoftware (50) dazu eingerichtet ist, Einsatzdaten oder von aus Einsatzdaten abgeleitete Daten mittels des Telekommunikationsendgeräts (10) über die externe Kommunikationsschnittstelle (11) an einen externen Rechner (501) zu versenden und/oder Einsatzdaten mittels des Telekommunikationsendgeräts (10) über die externe Kommunikationsschnittstelle (11) von einem externen Rechner (501) zu empfangen.

16. System nach einem der Ansprüche 10 bis 15, umfassend mindestens ein weiteres Telekommunikationsendgerät (20), das seinerseits Bestandteil eines Systems nach einem der Ansprüche 10 bis 15 in Bezug auf ein anderes Bodenflächenbearbeitungsfahrzeug oder örtlich fortbewegtes Bodenflächenbearbeitungsgerät (200) ist, wobei die Anwendungssoftware (50) der Telekommunikationsendgeräte (10,20) dazu eingerichtet sind, Einsatzdaten zwischen den Telekommunikationsendgeräten (10, 20) zu übermitteln.
